# FASCICULE DE BREVET EUROPEEN

(11) **EP 1 147 424 B1**
(45) Date de publication et mention de la délivrance du brevet: **13.09.2006**
(21) Numéro de dépôt: 99961131.2
(22) Date de dépôt: 21.12.1999
(51) Int. Cl.: G01P 13/02, B64D 15/12

(54) **GIROUETTE DE MESURE DE L'ORIENTATION DU VENT A RECHAUFFEUR INTEGRE**
RICHTUNGSFAHNEN-DREHWERTGEBER ZUR MESSUNG DER WINDRICHTUNG MIT INTEGRIETEM HEIZER
VANE FOR MEASURING WIND ORIENTATION WITH INTEGRATED HEATER

(30) Priorité: 23.12.1998 FR 9816352
(43) Date de publication de la demande: 24.10.2001
(73) Titulaire: THALES AVIONICS S.A., 78140 Vélizy Villacoublay (FR)
(72) Inventeur: ROBERGE, Philippe Thomson-CSF Prop. Int. Dép. Bre., 94117 Arcueil Cedex (FR)
(74) Mandataire: Guérin, Michel
(86) Numéro de dépôt international: PCT/FR1999/003235
(87) Numéro de publication internationale: WO 2000/039592

(56) Documents cités:
- EP-A- 0 100 715
- US-A- 3 882 721
- US-A- 5 438 865

## Description

La présente invention a pour objet une girouette de mesure de l'orientation du vent. Dans l'invention, la girouette comporte une palette à réchauffeur intégré. Elle trouve plus particulièrement son application dans l'industrie aéronautique, où une telle girouette informe sur l'orientation du vent apparent d'un avion. La girouette de l'invention peut néanmoins être utilisée dans d'autres domaines, en particulier en météorologie, notamment lorsque des conditions de température et d'humidité sont sévères. Le but de l'invention est de rendre plus fiable la constitution d'une telle girouette.

Pour permettre le pilotage d'un avion, la connaissance de l'orientation du vent apparent dans lequel évolue l'avion est nécessaire. Cette connaissance permet de calculer un paramètre d'incidence, d'où découle le calcul d'un paramètre critique : la portance. La connaissance de la portance de l'avion, à tout moment au cours du vol, est absolument nécessaire à la sécurité du vol. Cette connaissance est apportée en partie par une girouette. La girouette est un élément fixé sur la structure externe de l'avion. Comme tout élément externe, et rattaché à un avion, cette girouette doit être dégivrée, et être étanche. Le but de l'invention est de garantir le réchauffage et l'étanchéité intégrale d'une palette de la girouette, partie externe mobile de l'avion.

La palette de la girouette doit être dégivrée pour que l'orientation du vent donnée par cette girouette ne soit pas faussée par une déformation externe, en givre, déséquilibrant la girouette, et donc faussant la mesure de l'orientation du vent apparent et les calculs de portance liés à cette orientation.

Le document US-A-5 438 865 décrit une palette mobile à l'intérieure de laquelle se trouvent des éléments chauffants 17 et 18 sous forme de pastilles circulaires en appui contre des faces internes de la palette.

Le document EP 0 100 715 décrit une sonde d'incidence dont l'élément sensible au vent est dégivré au moyen d'un réchauffeur introduit dans l'élément sensible par un orifice situé le long du bord de fuite de l'élément sensible.

Le document US 3 882 721 décrit une palette mobile à l'intérieur de laquelle circule un fil chauffant.

D'autre part la palette de la girouette doit être étanche. Cette étanchéité permet d'éviter des infiltrations d'humidité dans des systèmes électriques de chauffage. En effet, ces infiltrations peuvent produire des courts-circuits qui entraînent soit un arrêt du dégivrage de la palette, soit une disjonction dans une alimentation électrique du système de chauffage, et donc une erreur dans la mesure fournie.

Pour garantir le dégivrage de la palette de la girouette, un élément chauffant allongé, appelé réchauffeur, est placé à l'intérieur de la palette. Ce réchauffeur assure le réchauffage, depuis l'intérieur de la palette, des surfaces extérieures de la palette. Ce réchauffeur est un système électrique. Dans l'état de la technique, le réchauffeur est introduit à l'intérieur de la palette par une fente située sur un bord de fuite de la palette. L'existence de cette fente au contact avec l'air entourant l'avion conduit à un problème d'étanchéité.

Pour garantir l'étanchéité de la palette de la girouette, après introduction du réchauffeur, une résine est coulée dans cette fente. La résine doit remplir l'intégralité de la fente permettant l'introduction du réchauffeur. Cette résine est en contact avec le corps de la palette, avec le réchauffeur, et avec l'air extérieur.

La résine doit donc avoir des caractéristiques techniques suivantes : une bonne isolation électrique vis à vis du réchauffeur, une bonne conductibilité thermique pour garantir un dégivrage de la zone de la fente de la palette, une bonne adhérence au matériau de composition de la palette, afin d'assurer une obturation complète de la fente, une bonne souplesse pour supporter sans se fissurer des dilatations différentielles du réchauffeur et de la palette, et enfin une bonne tenue de ces caractéristiques aux températures extrêmes de - 60°C à + 220°C.

L'existence d'une résine possédant toutes ces caractéristiques pose des problèmes. En effet les caractéristiques requises sont contradictoires et ne peuvent pas coexister avec un même niveau de performance au sein d'une même résine. Dans l'invention, on a voulu résoudre le problème de ces exigences contradictoires. Dans ce but, on a séparé les fonctions d'étanchéité des fonctions d'isolation électrique et de conductibilité thermique. Dans l'invention, la résine n'aura même plus à assurer de fonction d'étanchéité. Ou si celle-ci demeure, une même résine n'aura plus à assurer deux types de fonctions. On règle en fait la question de l'étanchéité de la fente d'introduction du réchauffeur en supprimant tout simplement cette fente.

On introduit alors le réchauffeur dans la palette par un autre endroit de celle-ci : notamment par son embase. La palette, au lieu d'avoir globalement la forme d'un dièdre, ouvert sur son bord de fuite, a alors la forme d'un tube, à section effilée pour comporter des bords d'attaque et de fuite. Le réchauffeur est introduit dans ce tube par une des extrémités de ce tube. Dans ce cas, la palette est creuse, alors que les palettes en dièdre de l'état de la technique ne sont pas creuses. On montre qu'en agissant ainsi, on peut d'une part séparer les fonctions de la résine, et d'autre part aboutir mieux aux performances requises.

L'invention a donc pour objet une girouette de mesure de l'orientation du vent comportant une embase tournante, une palette sensible au vent et fixée par une jonction à l'embase, et un réchauffeur introduit dans la palette, la palette étant creuse et munie d'un orifice d'introduction situé à l'embase de la palette pour introduire le réchauffeur, le réchauffeur étant de forme allongé et plaqué contre des parois internes de la palette creuse par l'intermédiaire d'un ressort. Les modes particuliers de réalisation de l'invention sont définis dans les revendications dépendantes 2 à 11.

L'invention sera mieux comprise à la lecture de la description qui suit et à l'examen des figures qui l'accompagnent. Celles ci ne sont présentées qu'à titre indicatif et nullement limitatif de l'invention. Les figures montrent :
- Figure 1 : une représentation schématique tronquée d'un nez d'avion supportant une girouette selon l'invention, vue en coupe. La girouette peut être placée aussi bien au-dessus, qu'en dessous de l'avion ;
- Figure 2a : une coupe schématique du corps de la palette perpendiculaire à un bord d'attaque de la palette ;
- Figure 2b : une coupe du même type que celle de la Figure 2a, et présentant un deuxième modèle de réchauffeur, permettant le dégivrage optimisé des surfaces externes de la palette de la girouette ;
- Figure 2c : une coupe du même type que celle de la Figure 2b, et présentant un autre modèle de réchauffeur, permettant le dégivrage optimisé des surfaces externes de la palette de la girouette ;
- Figure 3 : une coupe schématique de la palette et de l'embase tournante selon un plan de symétrie de la palette.

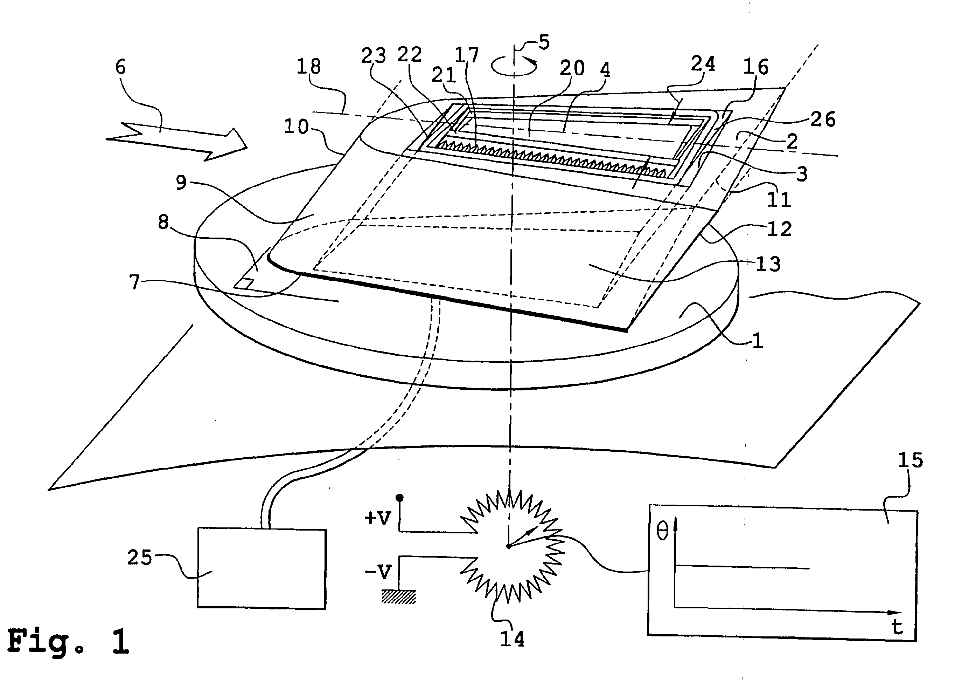

La figure 1 montre une girouette selon l'invention. Celle-ci comporte une embase 1, sur laquelle est fixée une palette 2. La palette 2 est creuse en son intérieur 3 qui contient un réchauffeur 4. L'embase 1 est tournante avec la palette 2 autour d'un axe de rotation 5. L'embase 1 est entraînée par la palette 2. La palette 2 s'oriente en effet librement selon le sens du vent 6.

La palette 2 est fixée à l'embase 1 par une jonction 7. La palette 2 est un corps dont la forme est dérivée de celle d'un cylindre fermé tronqué. La forme de ce cylindre est définie comme suit. Elle comporte, dressée sur un plan 8 de l'embase 1, une surface externe 9. La surface externe 9 est prolongée en hauteur le long d'un bord d'attaque 10 et de deux bords de fuites 11 et 12. La surface 9 a dans un exemple un profil en triangle isocèle. Les sommets de ce triangle isocèle sont définis par les intersections des bords d'attaque 10 et de fuite 11 et 12 de la surface 9, avec le plan 8. Le triangle isocèle a sa pointe orientée vers le bord d'attaque 10. La surface 9 repose en contact avec l'embase 1 par la jonction 7. La surface 9 forme un tube creux. Ce tube creux possède à une de ses extrémités un orifice 13. L'orifice 13 débouche sur la cavité 3 de la palette 2. Et cet orifice 13 permet l'introduction du réchauffeur 4 dans la cavité 3.

Une caractéristique essentielle de l'invention est que la cavité 3 est obtenue à partir de la surface tubulaire et creuse 9, et non à partir d'une surface dièdrique définie entre les deux bords de fuite 11 et 12. La palette 2 est donc un élément creux, non ouvert à l'arrière de ses faces latérales. Un avantage de cette caractérisique de l'invention réside dans le fait que le profil de la surface 9 a un profil tronqué fermé, et qu'il peut avoir une forme non tronquée, par exemple elliptique, ce qui minimise une traînée due aux bords de fuite 11 et 12.

La palette 2 et l'embase 1 sont reliées à un ou plusieurs capteurs d'orientation. Par exemple, un capteur d'orientation peut être schématiquement représenté par un potentiomètre 14. De préférence, le capteur d'orientation comporte un resolver ou un synchrodétecteur. L'axe de rotation 5 de la palette 2 est solidaire d'un curseur ou, d'un autre type d'excitateur, pointant sur une zone du potentiomètre 14 correspondant à l'orientation du vent 6. Le potentiomètre 14 montré est alimenté entre -V et +V. Un convertisseur analogique numérique (non représenté) peut transformer la valeur de la tension fournie par le curseur du potentiomètre 14 en un signal binaire dont la valeur indique l'orientation du vent. Ce signal peut être affiché sur un afficheur 15.

Dans un exemple, la palette 2 est en alliage d'aluminium, ou en un autre alliage métallique léger, résistant aux chocs et bon conducteur de la chaleur. Elle peut être formée par filage, moulage et usinage. La palette 2 peut être creusée par électroérosion au fil, ou par brochage lors d'une fabrication de grande série.

Le creux de la surface 9 définit ainsi la cavité 3 dans laquelle loge le réchauffeur 4. Le réchauffeur 4 a une forme allongée. L'orifice 13 et la cavité 3 sont plus larges que le réchauffeur 4. Après l'introduction du réchauffeur 4 dans la cavité 3, un espace 16 est résiduel entre les parois de la cavité 3 et les surfaces externes du réchauffeur 4. Les contours du réchauffeur 4 suivent les formes de la cavité 3, de manière à minimiser le volume de l'espace 16.

Le réchauffeur 4 comporte une résistance de chauffage entourée par deux électrodes enrobées dans un film isolant électrique. Le réchauffeur 4 n'est donc pas en contact parfait avec les parois de la cavité 3, qu'il doit réchauffer. Pour augmenter la superficie des zones de contact entre réchauffeur 4 et parois de la cavité 3, un ressort 17 est placé entre le réchauffeur 4 et une des parois internes de la palette creuse 2. Du côté opposé à ce ressort, le réchauffeur 4 est bien plaqué contre la paroi interne de la palette 2. Du côté du ressort 17, le contact thermique est assuré par une graisse.

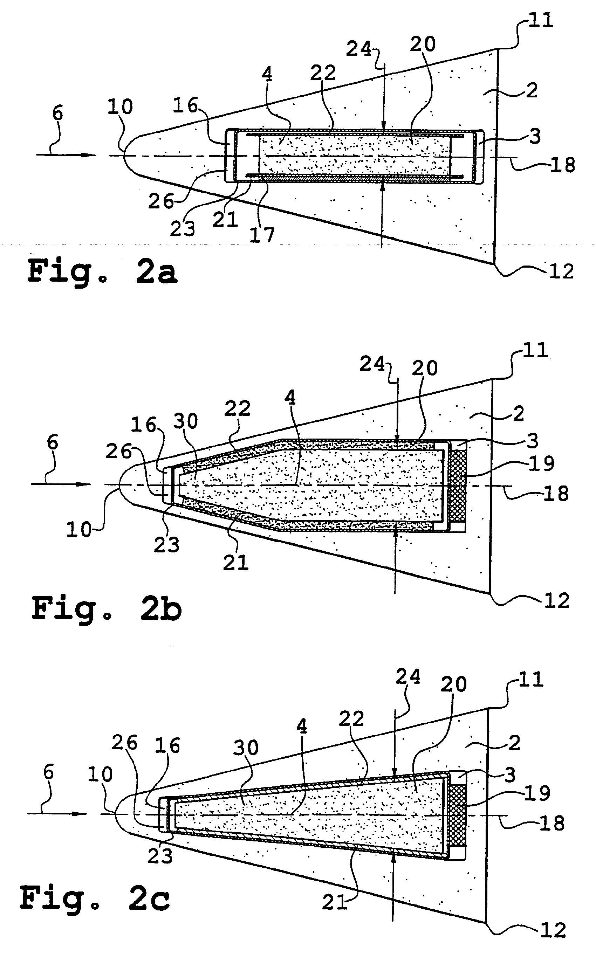

Selon les figures 1 et 2a, le ressort 17 est de préférence formé d'une plaque de bronze au beryllium. Le ressort 17 est plaqué le long d'une des faces du réchauffeur. Le ressort 17 a la forme d'une plaque longeant le réchauffeur 4, selon l'axe d'introduction du réchauffeur dans la cavité 3. Le ressort 17 est inclus de préférence dans le réchauffeur 4. Le ressort 17 est alors plaqué entre l'une des électrodes et un film isolant électrique. Le ressort 17 pousse le réchauffeur 4 contre la paroi opposée de la cavité 3. Le ressort 17 favorise le contact entre des parois de la cavité 3 et le réchauffeur 4. Il assure la transmission de chaleur du réchauffeur 4 vers la palette 2 par le biais des ondulations formées dans la plaque qui le constitue. L'espace 16 est ainsi supprimé, et les surfaces de contact entre parois de la cavité 3, et réchauffeur 4 sont accrues.

Selon les figures 1 et 2a, l'orifice 13 a une forme rectangulaire allongée selon un axe 18 perpendiculaire au bord d'attaque 10. L'axe 18 passe par la médiane du triangle isocèle défini par le profil de la surface 9. Le réchauffeur 4 a le même type de forme que l'orifice 13, défini selon les figures 1 et 2a.

Selon la figure 2b, l'orifice 13 est en forme d'ogive. Il est caractérisé par le fait que la pointe de l'ogive est orientée vers la pointe du triangle isocèle défini par la surface 9. Le réchauffeur 4 possède aussi, selon un profil perpendiculaire au sens d'introduction, une ogive 30. La coupe du réchauffeur, selon la figure 2b, est également en forme d'ogive, s'orientant selon le même axe que l'ogive de l'orifice 13. Le bord d'attaque 10 de la palette 2 est généralement le plus froid, car directement soumis au vent. Cette portion de la palette 2 nécessite tout particulièrement un bon dégivrage. C'est pourquoi le réchauffeur 4 doit être particulièrement en contact avec les parois de la cavité 3 dans cette zone. La cavité 3 étant plus large que le réchauffeur, un ressort 19 est inséré dans l'espace 16 pour pousser le réchauffeur vers le bord d'attaque, vers les parois de la cavité 3 devant le plus être dégivrées. Le ressort 19 peut être constitué comme le ressort 17.

Selon la figure 2c, l'orifice 13 a une forme plus poussée de l'ogive de la figure 2b. L'orifice 13 a une forme de trapèze orienté de la même manière que l'ogive de la figure 2b. Le réchauffeur 4 a alors également une forme de trapèze, orienté de la même manière que dans la figure 2b.

Une première amélioration proposée selon les figures 2b et 2c, est de placer un ressort 19 à l'opposé de la pointe de l'ogive, ou du trapèze. Le ressort 19 est placé entre une base large de l'ogive (ou du trapèze) de l'orifice 13, et une base large de l'ogive (ou du trapèze) du réchauffeur 4. Le ressort 19 est préférentiellment externe au réchauffeur 4. Les ressorts 17 et 19 constituent néanmoins des obstacles thermiques. Selon les figures 2b et 2c, le ressort 19 est placé à proximité des bords de fuite 11 et 12. La dissymétrie imposée par le ressort 17 est alors supprimée. De plus, la partie de la palette du côté des bords de fuite 11 et 12 a le moins besoin d'être réchauffée. Donc, les conséquences néfastes de la position du ressort sont minimisées.

Une deuxième amélioration proposée selon les figures 2b et 2c provient du fait que la forme de l'orifice 13 est variable. L'épaisseur du tube formant la palette est variable. La forme du réchauffeur 4 peut être adaptée à la cavité 3 de la palette 2. L'épaisseur du tube de la palette 2 est conçue de manière à être minimisée pour des zones de la palette devant être le plus significativement dégivrées.

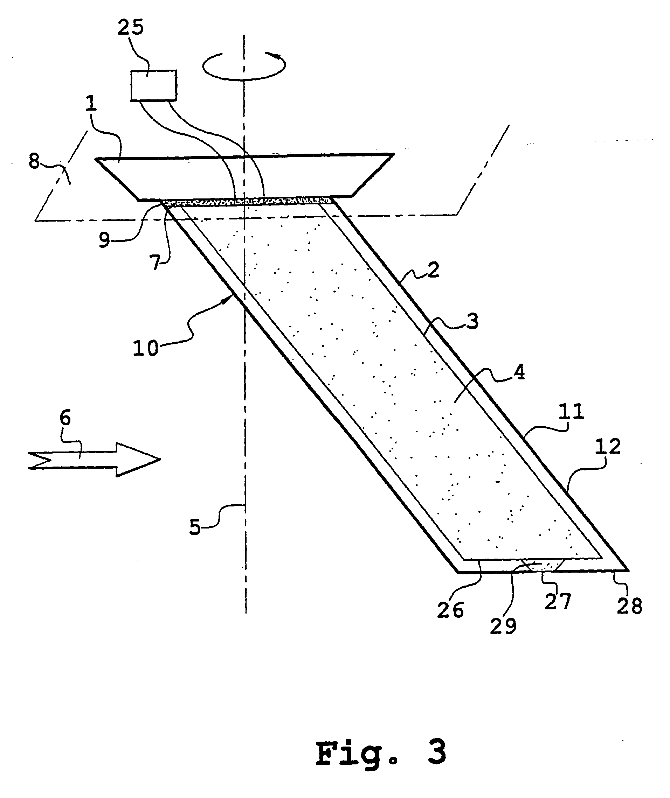

Le réchauffeur 4 logé à l'intérieur de la cavité 3, a une forme dérivée d'un parallélépipède. Cette forme est cylindrique avec une génératrice orientée selon les axes définis par les bords d'attaque 10 et de fuite 11 et 12. Selon les figures 1 et 3, le bord d'attaque 10 et les bords de fuite 11 et 12 sont parallèles entre eux. Ils sont de préférence inclinés par rapport à l'axe de rotation 5 de l'embase 1 de telle façon que le bord d'attaque 10 coupe l'axe de rotation 5. Dans ce cas, le réchauffeur 4 peut avoir, dans un plan contenant l'axe 5 de rotation et l'axe 18, un profil en parallélogramme introduit dans la palette 2 selon un de ses côtés. Ceci n'est pas limitatif, les bords d'attaque 10 et de fuite 11 et 12 peuvent ne pas être parallèles, de même ils peuvent ne pas être inclinés par rapport à l'axe de rotation 5.

Le réchauffeur 4 comporte des blocs de céramique 20 formant une résistance de chauffage. Les blocs sont entourés de deux plaques conductrices 21 et 22. L'ensemble des pièces 20, 21 et 22 est enrobé dans un film 23, isolant électrique mais bon conducteur thermique. Les plaques 21 et 22 sont accolées en vis à vis à l'ensemble des blocs de céramique 20. Les plaques 21 et 22 ont une fonction d'électrodes.

Les blocs de céramique 20 ont une géométrie variable. L'épaisseur variable du réchauffeur, demandée par la géométrie interne de la cavité 3, est obtenue par une épaisseur variable des blocs de céramique, et par une courbure des plaques 21 et 22. Selon le plan de coupe des figures 1, 2a, 2b et 2c, l'épaisseur 24 des blocs de céramique varie de un millimètre environ à quelques millimètres. Les épaisseurs des électrodes 21 et 22 et du film 23, selon les figures 1, 2a, 2b et 2c sont préférentiellement inférieures à l'épaisseur 24.

Les blocs de céramique 20 forment de préférence des éléments résistifs à coefficient de température positif. Les deux électrodes 21 et 22 sont connectées à une alimentation électrique 25. Ces deux plaques 21 et 22 sont préférentiellement constituées en laiton (Figure 3). Ce matériau est choisi pour sa faible resistivité, et parce que le laiton migre peu sous l'effet de la température au travers des blocs de céramique 20 lors de la création de chaleur.

Les plaques 21 et 22 sont appliquées aux blocs de céramique 20, par l'intermédiaire d'un ressort 17, ou d'un ressort 19. Dans l'état de la technique les plaques 21 et 22 sont brasées au bloc 20. L'avantage que procure l'invention est que les plaques 21 et 22 peuvent être maintenues en contact avec le bloc 20, sans être brasées. Les inconvénients du brasage sont ainsi supprimés. En effet, un premier inconvénient du brasage réside dans le fait que les blocs de céramique à coefficient de température positif se dégradent lors du brasage. D'autre part, un deuxième inconvénient réside dans le fait que les électrodes 21 et 22 sont solidaires des blocs de céramique 20, alors qu'ils sont constitués dans des matériaux ayant des coefficients de dilatation très différents. Cette différence aboutit généralement à la cassure du réchauffeur 4.

La puissance délivrée par le réchauffeur 4 est inversement proportionnelle à la résistance des blocs de céramiques 20. La fonction définissant la puissance est de type : P = U² / R. Les blocs de céramique à coefficient de température positif sont caractérisés par le fait que leur résistance est une fonction croissante de la température. Le dégivrage de la palette souhaité doit être adapté au gradient de température appliqué à la palette 2, en phase de vol. Selon l'invention, une première amélioration du réchauffage de la palette est l'asservissement automatique du réchauffage au gradient de température de la palette. En effet, plus la palette est froide à un endroit, et plus le réchauffeur fournira de chaleur à cet endroit.

Selon les figures 2b et 2c, une deuxième amélioration du réchauffage est possible. En effet, à l'avant de la palette 2, du fait de la diminution de l'épaisseur 24 des blocs de céramique, leur résistance diminue, et donc la puissance maximale délivrée dans cette zone est plus forte.

Le film 23 enrobant les deux électrodes 21 et 22, elles-mêmes enserrant les blocs de céramique 20, est un isolant électrique, également bon conducteur thermique. Le film 23 assure l'isolation électrique du montage des deux électrodes 21 et 22, et de leurs connections à l'alimentation électrique 25. Dans un exemple le film 23 est en polyimide.

Le réchauffeur 4 est enduit de graisse 26. La graisse 26 facilite son introduction dans la cavité 3 de la palette 2. La graisse 26 vient au contact du film isolant électrique 23. Cette graisse 26 occupe tout l'espace vide entre le réchauffeur 4 et les parois de la cavité 3. La graisse 26 est préférentiellement une graisse sans bulles d'air, car elle doit avoir une fonction de bon conducteur thermique. En effet, la chaleur développée par le complexe des blocs de céramiques 20 encadrés par les deux électrodes 21 et 22, et le film 23, doit également être conduite sans pertes vers les zones où le dégivrage est recherché : vers le corps de la palette 2. La graisse 26 doit également être un bon isolant électrique, de même que le film 23. Cette graisse 26 est préférentiellement une graisse du type utilisé pour le montage de radiateurs sur des transistors de puissance.

Pour garantir l'absence d'air dans la cavité 3, après l'introduction de la graisse 26, puis du réchauffeur 4 dans la cavité 3, un évent 27, situé à une autre extrémité 28 de la palette 2, à l'opposé de l'orifice 13, permet l'évacuation du surplus de graisse 26. Préférentiellement la quantité de graisse 26 introduite dans la cavité 3 est optimisée de manière à éviter des débordements. Dans ce cas, il n'y a pas d'évent sur la palette 2.

L'évent 27, optionnel, est de taille très nettement inférieure à celle de l'orifice 13, placé sur la surface 8. Après montage du réchauffeur 4 dans le corps de la palette 2, cet évent 27 est bouché avec une résine 29 ayant pour seules fonctions : une bonne adhérence au matériau de composition de la palette 2 afin d'assurer l'obturation complète de l'évent, une bonne souplesse pour absorber sans se fissurer les variations dimensionnelles du réchauffeur 4 et de la palette 2 liées aux variations de température, et enfin une bonne tenue de ces caractéristiques aux températures extrêmes de - 60°C à + 220°C. Cette résine 29 est préférentiellement une résine silicone simple. Ce type de résine garanti l'étanchéité du bouchage. Cette résine 29 n'a pas besoin d'être bonne conductrice thermique, car elle n'est en contact avec l'air extérieur que pour la taille de l'évent 27, qui est lui-même très petit. Cette résine 29 n'est pas en contact direct avec le réchauffeur, et donc ne doit pas obligatoirement avoir des caractéristiques de bon isolant électrique. Ce type de résine garanti l'étanchéité de l'obturation de l'évent 27.

La palette 2 et l'embase 1 forment préférentiellemnt un ensemble monobloc. Le réchauffeur 4 est dans ce cas introduit dans la cavité 3 de la palette 2, par un orifice creusé dans l'embase 1. L'orifice de l'embase 1 a une ouverture supérieure ou égale à celle définie par l'orifice 13. L'orifice d'introduction du réchauffeur est bouché, après introduction du réchauffeur. Cet orifice qui est sur la surface de l'embase 1 non exposé aux conditions extérieures est bouché par une résine. La résine utilisée est du même type que la résine 29, il s'agit préférentiellemnt d'une résine de silicone simple.

## Revendications

1. Girouette de mesure de l'orientation du vent comportant une embase tournante (1), une palette (2) sensible au vent (6) et fixée par une jonction (7) à l'embase, et un réchauffeur (4) introduit dans la palette, la palette étant creuse et munie d'un orifice (13) d'introduction situé à l'embase de la palette pour introduire le réchauffeur, le réchauffeur étant de forme allongé, **caractérisée en ce que** le réchauffeur est plaqué contre des parois internes (3) de la palette creuse par l'intermédiaire d'un ressort (17, 19).

2. Girouette selon la revendication 1, **caractérisée en ce que** le ressort (17, 19) est placé sur une seule des faces latérales, ou à l'arrière, du réchauffeur.

3. Girouette selon l'une des revendications 1 à 2, **caractérisée en ce que** le ressort (17, 19) est en bronze ondulé.

4. Girouette selon l'une des revendications 1 à 3, **caractérisée en ce que** le réchauffeur comporte des blocs de céramique (20) d'épaisseur (24) variable, accolés à deux électrodes (21, 22), elles-mêmes emballées dans un film (23) isolant électrique, les électrodes étant de préférence en laiton.

5. Girouette selon la revendication 4, **caractérisée en ce que** le film isolant électrique est enduit d'une graisse (26) conductrice thermique.

6. Girouette selon l'une des revendications 1 à 5, **caractérisée en ce que** la palette possède un évent (27) situé (28) à l'opposé de l'orifice d'Introduction.

7. Girouette selon l'une des revendications 1 à 6, **caractérisée en ce que** le réchauffeur comporte des blocs de céramique à coefficient de température positif.

8. Girouette selon l'une des revendications 1 à 7, **caractérisée en ce que** le réchauffeur possède une épaisseur variable fonction de la géométrie interne de la cavité (3) de la palette.

9. Girouette selon l'une des revendications 1 à 8, **caractérisée en ce que** le réchauffeur possède, selon un profil perpendiculaire au sens d'introduction, une ogive (30).

10. Girouette selon l'une des revendications précédentes, **caractérisée en ce que** la palette (2) a la forme d'un tube, à l'intérieur duquel est introduit le réchauffeur (4) et **en ce que** l'épaisseur du tube est minimisée pour des zones de la palette (2) devant être le plus significativement dégivrées.

11. Girouette selon la revendication 10, **caractérisée en ce que** l'épaisseur du tube est minimisée au voisinage du bord d'attaque de la palette.

## Claims

1. Weather vane for measuring the orientation of the wind, comprising a rotary base (1), a vane (2) sensitive to the wind (6) and fixed by a joint (7) to the base, and a heater (4) inserted into the vane, the vane being hollow and having an insertion orifice (13) situated at the base of the vane so that the heater can be inserted, the heater having an elongate shape, **characterized in that** the heater is pressed against interior walls (3) of the hollow vane via a spring (17, 19).

2. Weather vane according to Claim 1, **characterized in that** the spring (17, 19) is placed on just one of the lateral faces, or at the rear, of the heater.

3. Weather vane according to either of Claims 1 and 2, **characterized in that** the spring (17, 19) is a crinkle spring made of bronze.

4. Weather vane according to one of Claims 1 to 3, **characterized in that** the heater comprises ceramic blocks (20) of varying thickness (24) held against two electrodes (21, 22) themselves wrapped in an electrically insulating film (23), the electrodes preferably being made of brass.

5. Weather vane according to Claim 4, **characterized in that** the electrically insulating film is coated with a thermally conducting grease (26).

6. Weather vane according to one of Claims 1 to 5, **characterized in that** the vane has a vent (27) situated (28) opposite the insertion orifice.

7. Weather vane according to one of Claims 1 to 6, **characterized in that** the heater comprises ceramic blocks with a positive temperature coefficient.

8. Weather vane according to one of Claims 1 to 7, **characterized in that** the heater has a thickness that varies according to the internal geometry of the vane cavity (3).

9. Weather vane according to one of Claims 1 to 8, **characterized in that** the heater has, in a profile perpendicular to the direction of insertion, an ogive shape (30).

10. Weather vane according to one of the preceding claims, **characterized in that** the vane (20) is in the shape of a tube, inside which the heater (4) is inserted, and **in that** the thickness of the tube is minimized for regions of the vane (2) which need to be deiced the most.

11. Weather vane according to Claim 10, **characterized in that** the thickness of the tube is minimized in the region of the leading edge of the vane.

## Patentansprüche

1. Windfahne zum Messen der Windorientierung, mit einem drehbaren Fußabschnitt (1), einer Fahne (2), die auf den Wind (6) anspricht und durch eine Verbindung (7) an dem Fußabschnitt befestigt ist, und einer Heizvorrichtung (4), die in die Fahne eingeführt ist, wobei die Fahne hohl ist und mit einer Einführöffnung (13) versehen ist, die sich an der Basis der Fahne befindet, um die Heizvorrichtung einzuführen, wobei die Heizvorrichtung eine längliche Form hat, **dadurch gekennzeichnet, dass** die Heizvorrichtung mittels einer Feder (17, 19) gegen die Innenwände (3) der hohlen Fahne gedrückt wird.

2. Windfahne nach Anspruch 1, **dadurch gekennzeichnet, dass** die Feder (17, 19) an einer einzigen der Seitenflächen oder an der Rückseite der Heizvorrichtung angeordnet ist.

3. Windfahne nach einem der Ansprüche 1 bis 2, **dadurch gekennzeichnet, dass** die Feder (17, 19) aus gewellter Bronze hergestellt ist.

4. Windfahne nach einem der Ansprüche 1 bis 3, **dadurch gekennzeichnet, dass** die Heizvorrichtung Keramikblöcke (20) mit unterschiedlicher Dicke umfasst, die an zwei Elektroden (21, 22) geklebt sind, die ihrerseits in einer elektrisch isolierenden Schicht (23) untergebracht sind und vorzugsweise aus Messing hergestellt sind.

5. Windfahne nach Anspruch 4, **dadurch gekennzeichnet, dass** die elektrisch isolierende Schicht mit einem wärmeleitenden Fett (26) überzogen ist.

6. Windfahne nach einem der Ansprüche 1 bis 5, **dadurch gekennzeichnet, dass** die Fahne eine Entlüftungsöffnung (27) besitzt, die sich gegenüber der Einführöffnung befindet (28).

7. Windfahne nach einem der Ansprüche 1 bis 6, **dadurch gekennzeichnet, dass** die Heizvorrichtung Keramikblöcke mit einem positiven Temperaturkoeffizienten enthält.

8. Windfahne nach einem der Ansprüche 1 bis 7, **dadurch gekennzeichnet, dass** die Heizvorrichtung eine veränderliche Dicke aufweist, die von der internen Geometrie des Hohlraums (3) der Fahne abhängt.

9. Windfahne nach einem der Ansprüche 1 bis 8, **dadurch gekennzeichnet, dass** die Heizvorrichtung längs eines zur Einführrichtung senkrechten Profils einen Spitzbogen (30) besitzt.

10. Windfahne nach einem der vorhergehenden Ansprüche, **dadurch gekennzeichnet, dass** die Fahne (2) die Form eines Rohrs hat, in dessen Innenraum die Heizvorrichtung (4) eingeführt ist, und dass die Dicke des Rohrs in Zonen der Fahne (2), die am stärksten zu enteisen sind, minimal ist.

11. Windfahne nach Anspruch 10, **dadurch gekennzeichnet, dass** die Dicke des Rohrs in der Umgebung der Angriffskante der Fahne minimal ist.
